# EUROPEAN PATENT APPLICATION

(11) **EP 1 046 701 A1**
(43) Date of publication of application: **25.10.2000**
(21) Application number: 99929732.8
(22) Date of filing: 07.07.1999
(51) Int. Cl.: C11B 5/00

(54) **METHOD AND DEVICE FOR PREVENTING OIL DEGRADATION**

(30) Priority: 07.07.1998 JP 19142898
(71) Applicant: Kobayashi, Susumu, Yokohama-shi, Kanagawa 244-0842 (JP)
(72) Inventor: Kobayashi, Susumu, Yokohama-shi, Kanagawa 244-0842 (JP)
(74) Representative: Weber, Dieter, Dr.
(86) International application number: JP9903667
(87) International publication number: WO0001791

(57) **Abstract**

Provided is a method for preventing degradation of oil, which comprises charging an inert gas into oil such as edible oil, and making the inert gas into fine bubbles in the oil to mix and disperse the fine bubbles therein. Preferably, the inert gas is charged into an optional portion of the circulation path while forcibly circulating the oil in a circulation path. It is advisable to filter the oil before charging the inert gas to remove impurities in the oil.

## Description

### Technical Field

The present invention relates to a method and an apparatus for preventing degradation of oil. More specifically, it relates to a method and an apparatus for preventing degradation of oil which is effective for preventing degradation of edible oil.

### Background of the Invention

Edible oils are degraded by oxidation with oxygen in air when these are allowed to stand in air for a long period of time. Especially, when edible oils which are used for cooking of frying in oil are heated at a high temperature of 200°C or more for a long period of time, molecules of oils are decomposed with time to general fatty acids, resulting in the degradation. Oils degraded give off an irritant smell, and viscosity is increased, making it impossible to provide crisp fries.

Since the edible oils thus degraded are hardly recovered to state as fresh as before degradation, these are currently treated in a waste treatment facility as waste oils at high charges. Waste oils are burned in the waste treatment facility. However, since a large amount of carbon dioxide gas is generated, it has been a serious problem to be solved from the standpoint of the global warming prevention plan in recent years. Accordingly, a treatment method in which degradation of oils can be prevented at low costs and a time that lapses until oils are discarded as waste oils can be prolonged as much as possible has been in demand.

### Disclosure of the Invention

It is an object of the invention to provide a method for preventing degradation of oil in which freshness of oil can be maintained for a long period of time and a time that lapses until oil becomes waste oil can be prolonged as much as possible.

Another object of the invention is to provide a method for preventing degradation of oil in which the freshness or the taste of edible oil used in cooking of fries in particular can be maintained for a long period of time.

Still another object of the invention is to provide an apparatus for preventing degradation of oil in which the above-described method for preventing degradation of oil is conducted at good efficiency.

To achieve the above-described objects the method for preventing degradation of oil in the invention is characterized by charging an inert gas into oil, and forming the inert gas into fine bubbles in the oil to mix and disperse the fine bubbles therein. Preferably, while the oil is forcibly circulated in a circulation path, the inert gas is charged in an optional portion of the circulation path. More preferably, the oil is previously treated with a filter to remove impurities in the oil, and the inert gas is then charged therein.

Still further, the apparatus for preventing degradation of oil according to the invention is characterized in that an oil tank for storing oil is connected with a circulation path for forcibly circulating the oil outside the oil tank, and a filter for removing impurities in the oil and an inert gas mixing portion for charging an inert gas and mixing and dispersing the inert gas are mounted in the circulation path in this order along the flow direction of the oil.

By charging the inert gas into the oil and making the inert gas into fine bubbles to mix and disperse the fine bubbles therein as described above, the removal of oxygen in the oil is expedited, and the contact between the oil and oxygen is controlled to be able to prevent the oxidation of the oil.

The effect of preventing the oxidation according to the invention is remarkable especially in case of edible oils, and the term (life) for which the freshness or the taste of oils can be maintained in a normal state in cooking of fries is prolonged to between approximately 2.5 and 3 times. Especially when impurities in oils are previously filtered and oils are then treated with an inert gas, the life can be prolonged to between approximately 3 and 5 times. Consequently, the period of until oils are subjected to burning treatment as waste oils can be prolonged, and the generation of a carbon dioxide gas or dioxine is suppressed. Accordingly, it can serve for the global environmental protection.

### Brief Description of the Drawings

Fig. 1 is a schematic view of an apparatus for preventing degradation of oil in the invention.
Fig. 2 is a schematic view of a filter used in the apparatus in Fig. 1.
Fig. 3 is a schematic view of an inert gas mixing portion used in the apparatus in Fig. 1.
Fig. 4(A) is a front view of a mixing rotary body constructing the inert gas mixing portion in Fig. 3.
Fig. 4(B) is a side view of the mixing rotary body Fig. 3.
Fig. 5(A) is a longitudinal sectional view of an apparatus for preventing degradation of oil according to another embodiment of the invention.
Fig. 5(B) is a sectional view taken along line Vb-Vb of Fig. 5(A).
Fig. 6 is a graphical representation showing comparison of the relation of a heating time (h) and an acid value between the case where a method of preventing degradation in the invention is conducted and the case where this method is not conducted, with respect to soybean oil.
Fig. 7 is a graphical representation showing comparison on the relation of a heating time (h) and a refractive index, a specific gravity and a rate of increase in viscosity between the case where a method of preventing degradation in the invention is conducted and the case where this method is not conducted, with respect to soybean oil.

### Best Mode for Carrying Out the Invention

Oil to which the method for preventing degradation of oil in the invention is applied is not particularly limited. As preferable examples of the oil may be mentioned edible oils used in cooking of fries and lubricating oils used in lubrication of internal combustion engines and dynamic machines. As examples of the edible oils may be examplified vegetable oils such as soybean oil, corn oil, safflower oil, cotton seed oil, rapeseed oil, sesame oil, sunflower oil and palm oil; and animal oils such as lard and tallow.

Examples of the inert gas used in the invention include a nitrogen gas, a carbon dioxide gas, an argon gas and a helium gas. Of these, a nitrogen gas is especially preferable because a deodorization effect to oils is high and economics and a safety are excellent.

The inert gas charged into the oil has to be mixed and dispersed such that it is made into fine bubbles in the oil. When the inert gas is mixed and dispersed into the oil as fine bubbles in this manner, the inert gas is uniformly dissolved in the oil, whereby oxygen in the oil is removed and the contact between the oil and oxygen is suppressed to suppress the oxidation.

Further, the inert gas expedites hydrolysis of a free acid when the oil is used at a high temperature, making it hard to oxidize the oil. Consequently, the increase in acid value of the oil is controlled, so that a fresh condition can be maintained. Further, since the smoke point is not allowed to decrease, the oil is hardly smoked. Since the change of the increase in viscosity is controlled, the oil is easily drained, and the heat transfer is rendered uniform, so that cooking of fries is effectively conducted.

In the invention, when the inert gas is charged in the oil and mixed and dispersed therein, it is advisable that impurities in the oil are previously removed before the treatment. The removal of impurities can easily be conducted by passing the oil through a filter. The impurities refer to food cakes or fried cakes in case of edible oils. These impurities are present in the oil to expedite the oxidation of oils. Accordingly, when the inert gas is charged after impurities are previously removed, the treatment of preventing degradation of oils can be conducted all the more effectively.

It is important that the inert gas charged in the oil is made into fine bubbles in this oil to provide a nearly emulsified state. The diameter of the fine bubbles is preferably between 10⁻⁵ and 10⁻⁷ cm. The inert gas is thus mixed and dispersed in the oil as fine bubbles, whereby the function of removal of oxygen in the oil is improved and the contact between the oil and oxygen is controlled.

The mixing amount of the inert gas based on the oil is preferably between 5 and 25% by volume, more preferably between 7 and 12% by volume. When the mixing amount of the inert gas is less than 5% by volume, the function of removal of oxygen is not satisfactory. Further, even when the mixing amount of the inert gas exceeds 25% by volume, the function of removal of oxygen is not expedited more, and the effect of controlling the oxidation is nearly saturated.

Further, in the invention, when the oil is treated with the inert gas, the oil is heated preferably at 60 to 240°C, more preferably at 80 to 180°C. The heating of the oil at such a temperature can help the inert gas to be dissolved into the oil. When the heating temperature is less than 60°C, the effect of the dissolution is not improved much. When it exceeds 240°C, the acid value of the oil tends to increase.

Further, when the oil is treated with the inert gas, it is advisable to apply to the oil a high voltage of 1,000 to 6,000 V, preferably 2.000 to 4,000 V. Especially, it is advisable to apply to the oil a high voltage having a high frequency of 10,000 to 30,000 Hz. Such a high voltage can easily be obtained from a domestic power of 100 V or 200 V using a transformer.

The application of such a high voltage leads to ionization of an unsaturated fatty acid in the oil, enabling the effective prevention of oxidation. When the voltage is less than 1,000 V, the ionization of the unsaturated fatty acid is insufficient. Even when it exceeds 6,000 V, the ionization activity of the unsaturated fatty acid is nearly saturated, and a further improvement can no longer be expected.

When the high voltage is applied to the oil as described above, the unsaturated fatty acid contained in edible oils is ionized to provide a colloidal state, whereby the oxidation of the double bond moiety of the unsaturated fatty acid is prevented. Further, the conductivity is imparted to the oil to improve the heat transfer. Accordingly, the heating temperature of the overall oil is made uniform, so that a phenomenon of locally increasing the temperature does not occur. The prevention of this phenomenon of locally increasing the temperature can prevent scorching of fries or adhesion of fried cakes to fries.

It is further advisable to pass a micro-current of 50 to 200 µA, preferably 80 to 150 µA along with the application of the above-described high voltage of 1,000 to 6,000 V, preferably 2,000 to 4,000 V. Such a conduction of the micro-current results in improving the heat conductivity of the oil and the effect of cooking of fries in edible oils in particular. When the current is less than 50 µA, the effect of the improvement of the heat conductivity of the oil is decreased. Further, even when the current exceeds 200 µA, the effect of the improvement of the heat conductivity is nearly saturated.

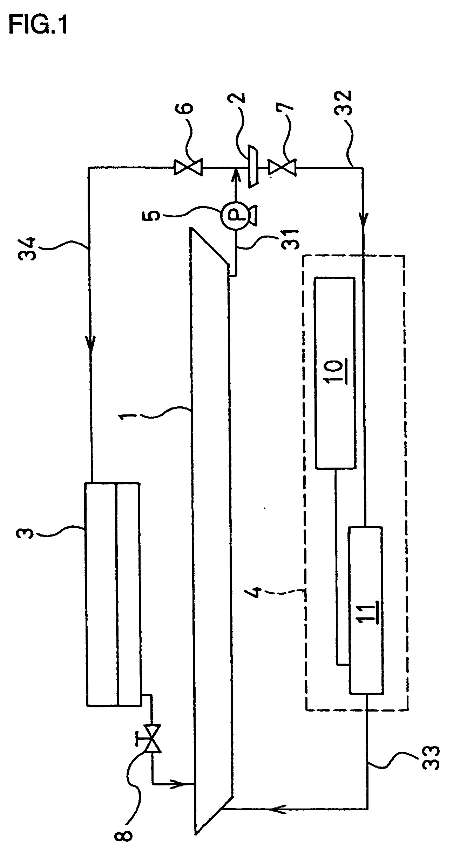

Fig. 1 shows an apparatus for practicing the method for preventing degradation of oil according to the invention.

Fig. 1 depicts a fryer for business use for conducting cooking of fries with edible oil, which is fitted with an oil tank 1 for storing edible oil. The oil tank 1 is connected with a circulation path formed by pipes 31, 32, 33. Through the circulation path, edible oil inside is taken outside the oil tank 1, and refluxed again. In this circulation path, a circulation pump 5 is connected with the pipe 31, a filter 2 and a solenoid valve 7 with the pipe 32, and further an inert gas mixing portion 4 between the pipes 32 and 33 respectively. The inert gas mixing portion 4 comprises a gas generating portion 10 for generating an inert gas and a mixing tank 11 for making an inert gas into fine bubbles and mixing and dispersing the fine bubbles in oil.

In addition, in the oil tank 1, another circulation path is provided by a pipe 34 branched from the pipe 31 via a solenoid valve 6. A filter 3 and a manual valve 8 are, in addition to the solenoid valve 6, provided in this circulation path. After cooking of fries for 1 day is completed, the solenoid valve 6 is opened, the solenoid valve 7 is closed, and the edible oil in the oil tank 1 is circulated in this circulation path. Then, impurities such as food cakes accumulated in the oil tank in the cooking for 1 day are removed through the filter 3, and the oil is returned to the oil tank 1.

Meanwhile, the former circulation path of the pipes 31, 32, 33 is provided for the treatment of preventing degradation of oil in the invention. In this treatment of preventing degradation of oil, the edible oil in the oil tank 1 is continuously circulated in the circulation path to remove impurities in the oil through the filter 3, and then passed through the inert gas mixing portion 4. In the inert gas mixing portion 4, the inert gas is charged from the gas generating portion 10, and further made into fine bubbles in the mixing tank 11, and the fine bubbles are mixed and dispersed in the oil. In this inert gas mixing portion 4, the heating of the oil and the application of the high voltage are conducted simultaneously with the above-described procedure, and the micro-current is passed.

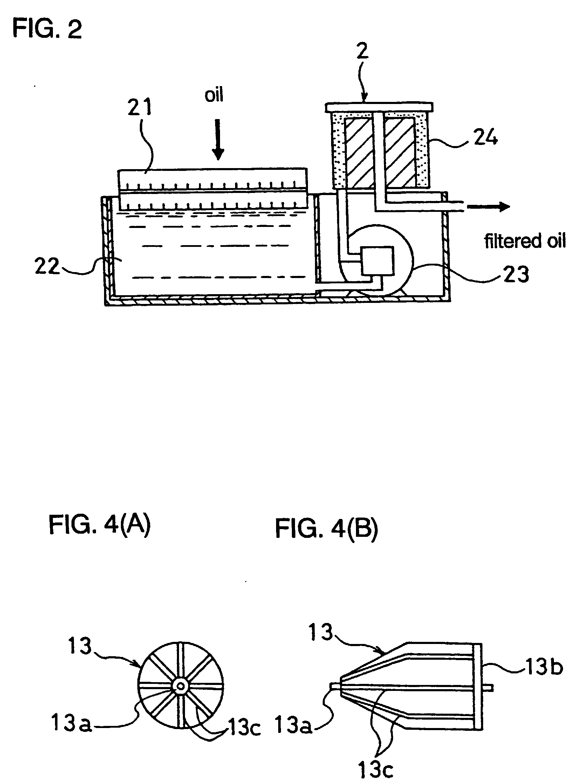

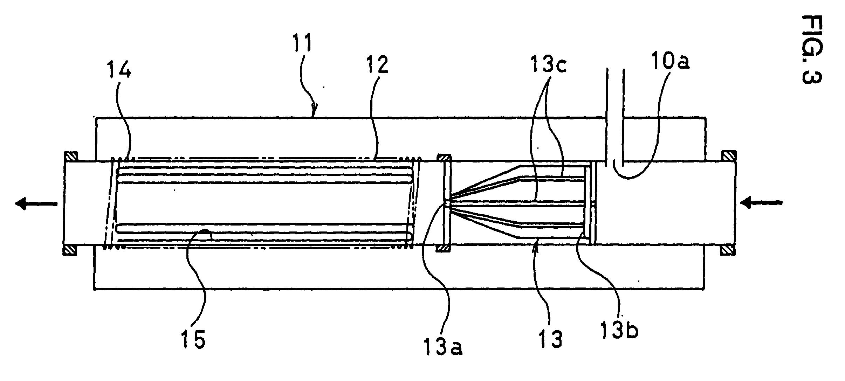

The structure of the filter 2 is not particularly limited so long as it can remove impurities in the oil. This is the same with the filter 3. Fig. 2 depicts an example of the filter 2. It is constructed such that an oil tank 22 having a filter paper 21 of a coarse mesh is disposed at a flow inlet, a suction pump 23 is connected with the outlet, and oil drawn up with the suction pump 23 is fed to a filter element 24 of a fine mesh under pressure.

The inert gas mixing portion 4 comprises the gas generating portion 10 of the inert gas and the mixing tank 11. Of these, the gas generating portion 10 may be a known inert gas generating device or an inert gas storage tank.

As the mixing tank 11, for example, a tank having a structure shown in Fig. 3 is used. A flow path 12 having a volume sufficient to retain oil therein is formed throughout the length. An inert gas inlet pipe 10a extending from the gas generator 10 and a rotary body 13 are mounted on the upstream side, and a heater 14 and a voltage application element 15 on the downstream side.

As shown in Figs. 4(A) and 4(B), the mixing rotary body 13 has a conical cylindrical shape which is narrowed on the rear end side, and rotatably supported with pivots on both front and back ends. Further, in the outer peripheral surface of the conical cylindrical shape, a plurality of slits 13c extending linearly from the rear end 13a to the front end 13b are formed, and the front face of the front end portion 13b is opened. The mixing rotary body 13 is rotated by feeding oil from the front opening of the front end portion 13b, and the rotary speed varies with the amount of oil fed in. It is adapted such that when the amount of oil fed in is small, the speed is low, and when it is large, the speed is high.

The oil and the inert gas are fed to the opening of the front end portion 13b, and the mixing rotary body 13 is rotated according to the amount of the oil fed in to conduct stirring, whereby the inert gas is dispersed in the oil as fine bubbles and the resulting oil is discharged from the slits 13c. The flow rate of the oil is adjusted with the circulation pump 5, and the feed rate of the inert gas from the gas generating portion 10 is adjusted according to the flow rate of the oil. The oil in which the inert gas in the form of fine bubbles is mixed and dispersed is heated with the heater 14 on the downstream side of the flow path 12, and a high voltage is applied thereto with the voltage application element 15 to pass a micro-current through the oil. These treatments are combined to ionize and deoxidize the oil, and the oil is converted to a hardly oxidizable oil which is then refluxed to the oil tank 1.

The treatment of preventing degradation of the oil can continuously be conducted irrespective of the use condition of the edible oil in the oil tank 1. That is, it may be conducted while the oil is used in cooking of fries or when cooking of fries is suspended. Further, only a predetermined amount of a part of the oil may be circulated from the oil tank 1 and treated.

The oil tank 1 may be made in any construction. It is advisable that the oil tank 1 is sealed in use by being covered for preventing oxidation on the oil surface lest oxygen in air should be fed into the tank.

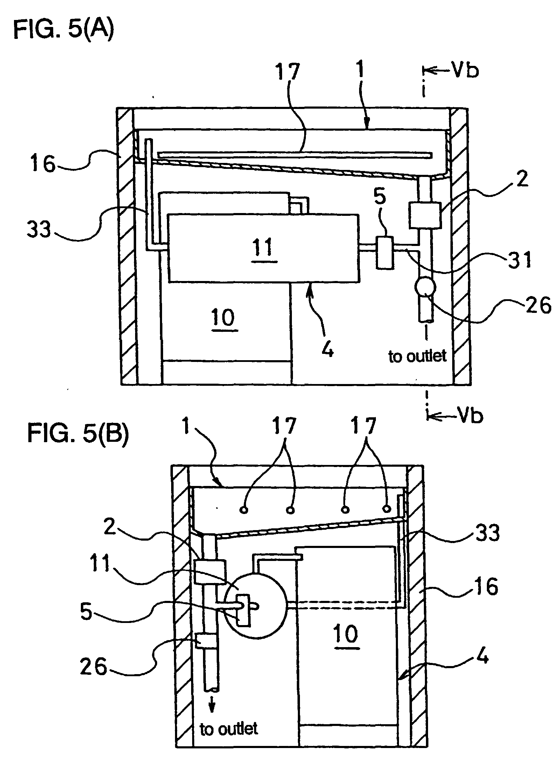

Figs. 5(A) and 5(B) show another example of an apparatus for practicing the method for preventing degradation of oil in the invention, and these are designed such that they can be installed in shops of fried food dealers.

In this apparatus, an oil tank 1 is mounted on an upper portion of a support base 16, and a filter 2, a gas mixing portion 4 comprising a gas generating portion 10 and a mixing tank 11, a circulation pump 5 and a solenoid valve 26 are mounted on the under side. A heater 17 is disposed on the oil tank 1. The respective portions form a circulation path through pipes 31, 33, which is the same as in the apparatus of Fig. 1, provided a filter 2 mounted only to remove impurities in oil as in Fig. 1 is omitted.

The method for treating prevention of degradation of oil is the same as conducted in the apparatus of Fig. 1. First, an edible oil in the oil tank 1 is passed through the filter 2 to filter impurities. Subsequently, the oil is passed through the gas mixing portion 4. In this portion, the inert gas is charged and made into fine bubbles, and the fine bubbles are mixed and dispersed in the oil. In this manner, the oil is modified to be hard of oxidation. The edible oil regenerated in the gas mixing portion 4 is refluxed to the oil tank 1 through the pipe 33, and subjected to cooking of fries.

The above-described treatment of preventing degradation of the oil can be conducted irrespective of the use state of the oil tank 1. When the gas mixing portion 4 is formed in a volume which is approximately the same as the volume of the oil tank, the treatment of the oil regeneration can be conducted in a lump by feeding the total amount of the oil in the oil tank 1 into the gas mixing portion 4, for example, after the completion of cooking procedure for 1 day.

As described above, the invention can prevent degradation of oil accompanied by oxidation and use oil for a long period of time. Especially, the effect of preventing degradation of edible oils is outstanding, and it is possible to keep good the final state and the taste of fries in cooking of fries for a long period of time. Further, the life that is passed until the oil is discarded as waste oil is extended to between approximately 2.5 and 3 times. Especially when impurities are previously removed through the filter and the oil is then treated with the inert gas, it can be extended to between approximately 3 and 5 times.

### Example 1 and Comparative Example 1

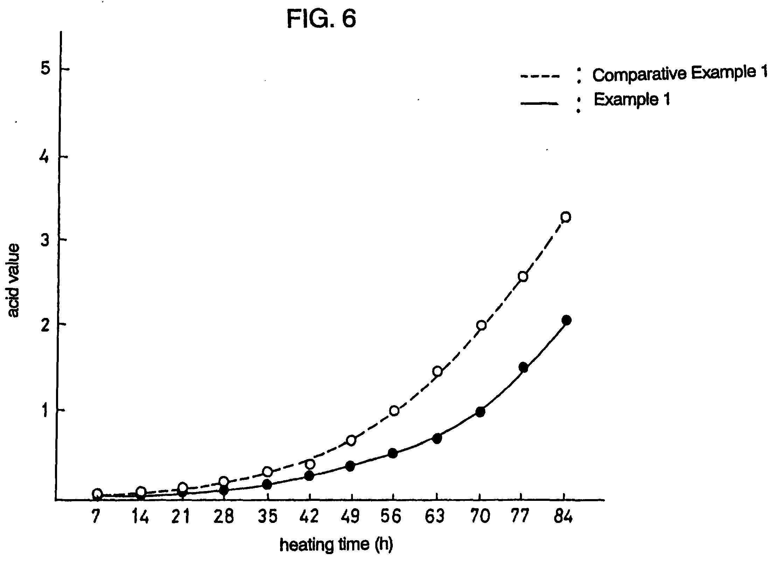

One hundred liters of a soybean oil was stored in an oil tank. While the soybean oil was heated at 180°C, a nitrogen gas having a concentration of 99.6% was blown. The treatment was continuously carried out for 84 hours while the nitrogen gas was made into fine bubbles having a diameter of 10⁻⁵ to 10⁻⁷ cm and the fine bubbles were mixed and dispersed. The acid value was measured every seven hours from the start-up of the treatment. The results are shown in Fig. 6 (Example 1).

On the other hand, the same amount of soybean oil was stored in the oil tank, and the soybean oil was continuously heat-treated at 180°C for 84 hours without blowing the inert gas. The acid value was measured every seven hours from the start-up of the treatment. The results are shown in Fig. 6 (Comparative Example 1).

As is clear from Fig. 6, the acid value in Example 1 in which the heat treatment was conducted while blowing the nitrogen gas was less increased than the acid value in Comparative Example 1, and the degradation of the oil could be delayed.

### Example 2 and Comparative Example 2

The structure shown in Fig. 1 was used. Soybean oil having an acid value of 0.3 was stored in an oil tank. This soybean oil was filtered through a filter 2 while being circulated at a flow rate of 70 liters/min. Subsequently, the oil was heated at 180°C while a nitrogen gas having a concentration of 99.6% was blown in an amount of 10% by volume each in an inert gas mixing portion 4. Further, a voltage of 2.000 V was applied, and a micro-current of approximately 100 µA was passed to conduct the treatment continuously for 70 hours.

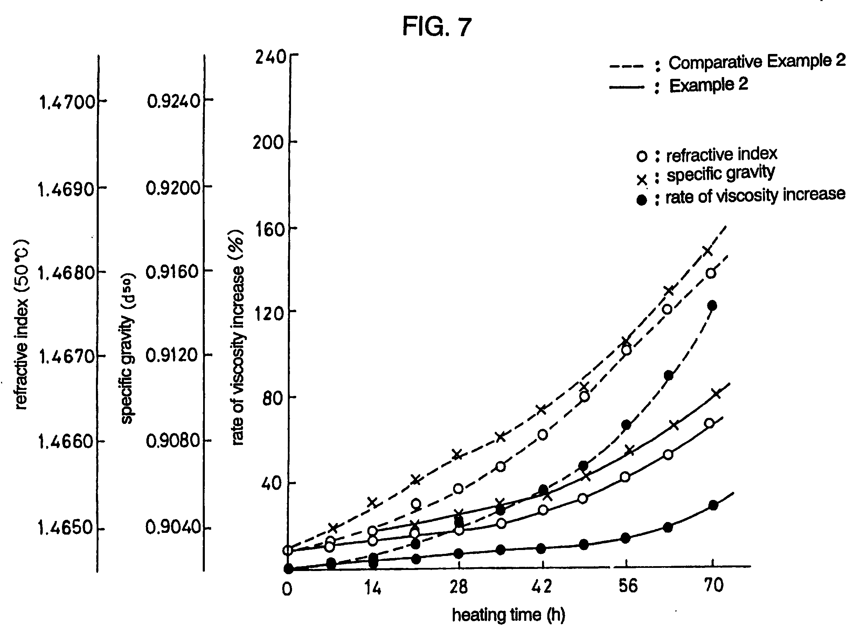

The rate (%) of increase in viscosity, the specific gravity, and the refractive index of the oil were measured every seven hours from this treatment. The results are as shown in Fig. 7 (Example 2).

Further, for comparison, the treatment in Example 2 was conducted continuously for 70 hours by only the heating at 180°C. The rate (%) of increase in viscosity, the specific gravity, and the refractive index of the oil were likewise measured every seven hours. The results shown in Fig. 7 were obtained (Comparative Example 2).

As is clear from Fig. 7, the rate of increase in viscosity, the specific gravity, the refractive index, and the acid value in Example 2 were less displaced than those in Comparative Example 2, and Example 2 was effective for the prevention of degradation of edible oil.

### Example 3 and Comparative Example 3

The treatments in Example 2 and Comparative Example 2 were conducted continuously for 90 hours, and the acid values thereof were then measured. Further, the transparency, the oxidized flavor, the fluidity, and the oil drainage of the oil were visually identified. Consequently, the results shown in the following table were obtained.

| | Example 3 | Comparative Example 3 |
|---|---|---|
| Acid value | 1.0 | 3.0 |
| Transparency | Good | opaque |
| Oxidized flavor | No | Yes |
| Fluidity | good | Bad |
| Oil drainage | good | bad |

### Industrial Applicability

The invention described above can effectively be utilized in the treatment of preventing degradation of not only edible oils but also lubricating oils used to lubricate internal combustion engines and dynamic machines.

## Claims

1. A method for preventing degradation of an oil, which comprises charging an inert gas into oil, and making the inert gas into fine bubbles in said oil to mix and disperse the fine bubbles in said oil.

2. The method for preventing degradation of oil as claimed in claim 1, wherein, while the oil is forcibly circulated in a circulation path, the inert gas is charged in an optional portion of the circulation path.

3. The method for preventing degradation of oil as claimed in claim 2, wherein said oil is edible oil.

4. The method for preventing degradation of oil as claimed in claim 2 or 3, wherein impurities in said oil are removed through a filter, and said inert gas is then charged.

5. The method for preventing degradation of oil as claimed in claim 2 or 3, wherein the diameter of the bubbles of said inert gas is adjusted to between 10⁻⁵ and 10⁻⁷ cm.

6. The method for preventing degradation of oil as claimed in claim 1, 2 or 3, wherein the mixing amount of said inert gas is between 5 and 25% by volume.

7. The method for preventing degradation of oil as claimed in claim 1, 2 or 3, wherein the diameter of the bubbles of said inert gas is between 10⁻⁵ and 10⁻⁷ cm, and the mixing amount of said inert gas is between 5 and 25% by volume.

8. The method for preventing degradation of oil as claimed in claim 1, 2 or 3, wherein the oil to which said inert gas is charged is heated at 60 to 240°C.

9. The method for preventing degradation of oil as claimed in claim 1, 2 or 3, wherein a voltage of 1,000 to 6,000 V is applied to the oil in which said inert gas has been charged.

10. The method for preventing degradation of oil as claimed in claim 1, 2 or 3, wherein a voltage of 1,000 to 6,000 V is applied to the oil in which said inert gas has been charged, and a current of 50 to 200 µA is passed through the oil.

11. The method for preventing degradation of oil as claimed in claim 1, 2 or 3, wherein said inert gas is one selected from the group consisting of a nitrogen gas, a carbon dioxide gas, an argon gas, and a helium gas.

12. An apparatus for preventing degradation of oil, wherein an oil tank for storing oil is connected with a circulation path for forcibly circulating the oil outside the oil tank, and a filter for removing impurities in the oil and an inert gas mixing portion for charging an inert gas and mixing and dispersing the inert gas are mounted in the circulation path in this order along the flow direction of the oil.

13. The apparatus for preventing degradation of oil as claimed in claim 12, wherein a circulation path different from said circulation path is provided in said oil tank, and a filter different from said filter is mounted in the circulation path.
